# FASCICULE DE BREVET EUROPEEN

(11) **EP 0 660 477 B1**
(45) Date de publication et mention de la délivrance du brevet: **12.08.1998**
(21) Numéro de dépôt: 94400992.7
(22) Date de dépôt: 06.05.1994
(51) Int. Cl.: H02G 3/12, G02B 6/44

(54) **Prise murale de raccordement pour système de câblage optique d'immeuble**
Wandverbindungsdose für eine optische Gebäudeverkabelung
Wall connection and termination device for an optical cable building distribution system

(30) Priorité: 21.12.1993 FR 9315389
(43) Date de publication de la demande: 28.06.1995
(73) Titulaire: BULL S.A., 92800 Puteaux (FR)
(72) Inventeur: Baptiste, René, F-78990 Elancourt (FR); Takats, Gilbert, F-78320 Le Mesnil Saint Denis (FR)
(74) Mandataire: Gouesmel, Daniel

(56) Documents cités:
- EP-A- 0 305 338
- EP-A- 0 364 075
- EP-A- 0 490 609
- DE-A- 3 900 021
- US-A- 4 669 802
- US-A- 5 265 186

## Description

La présente invention concerne une prise murale de raccordement pour système de câblage optique d'immeuble. Elle est donc plus particulièrement applicable aux réseaux locaux dont le support de transmission est préinstallé dans tous les bureaux d'un immeuble de type industriel ou de type commercial, dans lequel l'entreprise qui l'occupe, est équipée d'un réseau local propre qui permet de faire communiquer entre eux une pluralité de terminaux informatiques (système de traitement de texte, ordinateur de bureau, etc...) qui sont installés dans chacun des bureaux de l'immeuble.

On sait qu'un réseau de transmission de données est constitué par une pluralité d'unités appelées généralement terminaux ou stations. Ces derniers communiquent entre eux par l'intermédiaire d'un système de transmission possédant un support de transmission physique qui est constitué soit par deux paires de fils téléphoniques, soit par un câble coaxial, ou encore par des câbles de fibres optiques.

Les réseaux locaux sont des réseaux de transmission limités à une enceinte limitée en surface (immeuble, usine, campus, hôpital, etc...) où les distances entre stations vont de quelques mètres, ou dizaines de mètres à quelques kilomètres. Lorsque ce réseau local est disposé dans un immeuble, il est de plus en plus fréquemment précâblé. Cela signifie que l'ensemble de liaisons physiques de transmission de ce réseau sont préalablement installées dans l'immeuble, avant que les utilisateurs de cet immeuble n'occupent les différents locaux de celui-ci.

De manière générale, un immeuble précâblé comprend un répartiteur général et une pluralité de sous-répartiteurs. Les sous-répartiteurs sont les éléments de base du système de câblage. C'est vers eux que convergent toutes les liaisons locales informatiques ou bureautiques et celles du réseau commuté (téléphone) desservant tous les bureaux situés dans un rayon de deux cent mètres autour du sous-répartiteur. La fonction de celui-ci réalisée dans le local où il se trouve est le brassage. Ce brassage permet de créer les différentes liaisons dont on a besoin à partir du précâblage de l'immeuble. C'est généralement au niveau du sous-répartiteur que se fait l'interconnexion avec les réseaux de classe supérieure auxquels sont reliés le réseau local de l'immeuble. Le sous-répartiteur reçoit donc les passerelles avec les autres réseaux et comporte aussi les répéteurs du réseau d'immeuble et des concentrateurs. Entre les sous-répartiteurs et les bureaux sont installées les liaisons physiques de transmission. Il est bien évident que plusieurs sous-répartiteurs peuvent être reliés entre eux au répartiteur général.

De plus en plus fréquemment, les liaisons physiques de transmission sont constituées par des fibres optiques, lesquelles permettent des débits de transmission extrêmement élevés, pouvant aller à une ou plusieurs centaines de mégabits Mbits/s et ce en limitant au maximum les pertes en ligne.

Des réseaux précâblés d'immeuble utilisant l'un quelconque des supports de transmission physique énoncés ci-dessus, sont par exemple décrits plus en detail dans les brochures commerciales de la société BULL relatives au BULL CABLING SYSTEM (BCS), ce réseau câblé étant commercialisé par celle-ci. Dans chaque bureau, on fixe sur la plinthe des murs, disposées dans la partie inférieure de ceux-ci la plus proche du plancher, un certain nombre de prises de raccordement destinées à y raccorder les cordons provenant du ou des terminaux installés dans chacun des bureaux.

Lorsque le réseau local utilise un support de transmission formé de câbles à fibres optiques, on a affaire à des prises murales optiques de raccordement (on utilise également l'expression "point d'accès optique mural").

Dans la pratique courante, le précâblage optique des bâtiments ne concerne pratiquement que l'ossature principale du câblage et ne s'étend pas au niveau des bureaux pour des questions de besoin des clients et de coût de ce précâblage. Toutefois, un certain nombre de fabricants et de clients s'intéressent aux prises murales de raccordement et on peut penser que dans les années qui suivent, la technique de développement des prises optiques murales de raccordement connaîtra de plus en plus de succès.

Une prise optique murale de raccordement doit posséder les caractéristiques suivantes :
- avoir un coût relativement faible,
- pouvoir être précâblée ou postcâblée,

. Dans le cas d'un postcâblage :
   - pouvoir être installée à la demande,
   - pouvoir être déplacée,
   - pouvoir être installée très rapidement, ou au contraire démontée,
   - ne pas nécessiter d'outillage particulier pour l'installer,
   - pouvoir permettre de lover très simplement une certaine longueur de câble optique sans contrainte abusive sur le câble, et ce à l'intérieur si possible de la plinthe : en particulier il faut tenir compte du rayon de courbure maximum que peut subir un cordon de fibre optique pour être lové sans qu'il soit détérioré,
   - enfin avoir un coût faible.
. Dans le cas d'un précâblage les qualités nécessaires à une prise optique murale de raccordement sont les suivantes :
   - permettre à un utilisateur de pouvoir être connecté rapidement,
   - permettre de lover de manière simple une certaine longueur de câble sans contrainte abusive sur celui-ci,
   - avoir un trés faible coût avant utilisation, le point d'accès en précâblage étant généralisé.

De plus, dans l'un ou l'autre cas, (postcâblage ou précâblage), la prise murale doit avoir un format standard, c'est-à-dire avoir la forme d'une mosaïque de 50 x 50 millimètres ou éventuellement de 45 x 45 mm qui sera le standard utilisé dans les années qui viennent. De plus, la prise optique murale de raccordement doit pouvoir accepter tous types de connecteur.

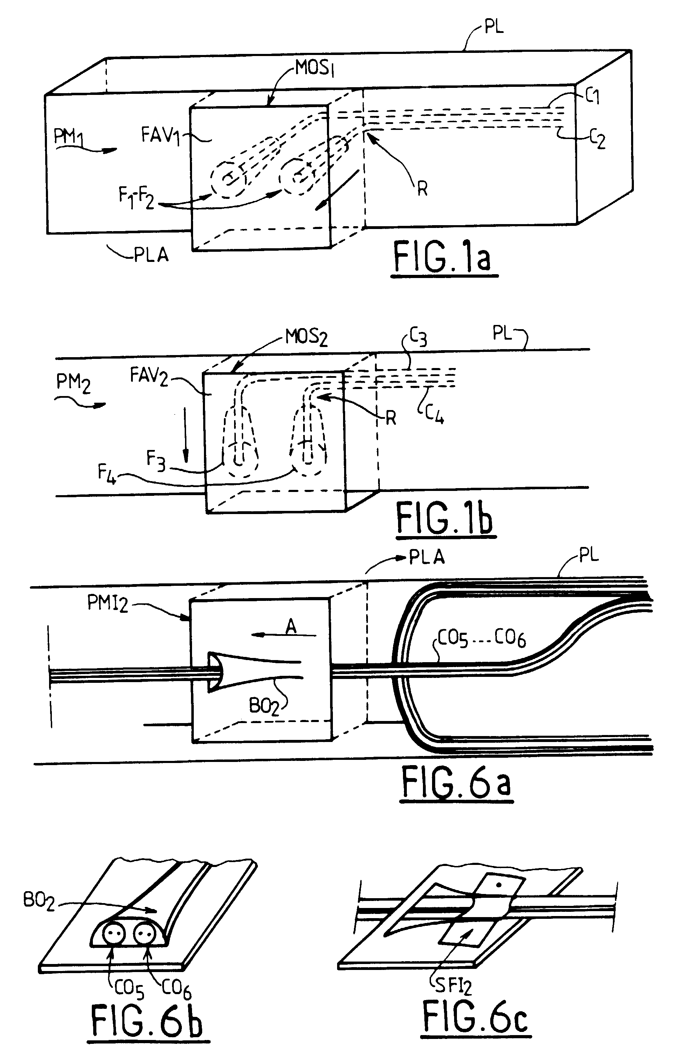

De manière générale, les prises optiques murales de raccordement existantes se présentent de la manière suivante, décrites en relation avec les figures 1a et 1b.

Sur la figure 1a, on voit une prise murale d'un premier type PM₁ qui se compose d'une mosaïque MOS₁, de forme parallélépipédique rectangulaire fixée sur la plinthe PL du mur, ce dernier n'étant pas représenté pour des raisons de simplicité du dessin. La prise PM₁ comprend également disposées à l'intérieur de la mosaïque deux fiches de raccordement F₁, F₂ perpendiculaires à la face avant FAV₁ de la mosaïque, face avant dont le plan est parallèle à celui du mur. En fait, les fiches de raccordement F₁ et F₂ ont une forme oblongue et c'est par abus de langage qu'on considère qu'elles sont perpendiculaires à la face avant FAV₁ alors qu'en fait c'est leur axe de symétrie longitudinale perpendiculaire à la surface du mur qui est perpendiculaire à cette face avant. On voit sur cette même figure 1a deux cordons de fibres optiques C₁, C₂ raccordés respectivement aux deux fiches F₁ et F₂. Pour ce faire, les deux cordons qui arrivent, ainsi qu'indiqué sur cette même figure, parallèlement au mur et à la surface du plancher PLA, doivent être courbés pour être raccordés aux deux fiches F₁ et F₂ sur une distance extrêmement courte, de sorte que ces cordons C₁ et C₂ présentent un rayon de courbure R non négligeable. De ce fait, il est difficile de lover le câble à l'intérieur de la plinthe au voisinage des fiches F₁ et F₂. Dans le cas de la prise murale PM₁, la connectorisation des cordons de raccordement du terminal s'effectue sur place.

Par ailleurs, les prises murales selon l'art antérieur présentent les inconvénients suivants :
- elles n'acceptent en général qu'un seul type de connectique,
- le sens de sortie des cordons d'utilisation allant vers le terminal ou la station est fixe,
- la prise murale installée, en cas de précablage est onéreuse et ce d'autant plus si elle reste inutilisée par la suite car elle est équipée systématiquement de ses connecteurs,
- enfin, elle ne possède qu'une seule fonction : connecter la station ou terminal au câble d'arrivée du sous-répartiteur.

On considère désormais la figure 1b qui montre une prise murale PM₂ se composant d'une mosaïque MOS₂ de face avant FAV₂ ayant la même forme parallélépipédique rectangle que MOS₁ et fixée de la même façon sur la plinthe PL. Cette prise murale PM₂ comporte deux fiches de raccordement F₃ et F₄ qui sont perpendiculaires à la surface du plancher PLA et donc orientées vers le bas. On voit également sur cette même figure les cordons de raccordement C₃ et C₄ raccordés aux fiches F₃ et l'on peut observer la présence d'un rayon de courbure R non négligeable qui est rendu nécessaire pour permettre de raccorder les deux cordons aux deux prises. L'inconvénient de la prise PM2 est donc ici le même que pour la prise PM₁, à savoir difficulté de lovage du câble pour le connecter aux deux fiches de raccordement F₃, F₄. Ces problèmes de rayon de courbure et de lovage du câble sont même plus délicats à résoudre que dans le cas de la fiche PM₁. Par contre, ce montage, fiches de connexion orientées vers le bas de la mosaïque, évite de ramasser toutes poussières qui se situent en grand nombre au niveau du plancher du bureau.

Les prises PM₁ et PM₂, nécessitent pratiquement un précâblage et une préconnectorisation (avec les fiches F₁-F₂ ou F₃-F₄). Cela suppose que l'on règle le problème du rayon de courbure ou de lovage de la fibre. La présente invention permet de solutionner ces problèmes en satisfaisant toutes les caractéristiques et qualités exposées ci-dessus.

On connaît également une prise murale de raccordement de cordons optiques à un terminal, pouvant être utilisée pour un système de câblage optique d'un immeuble, prise décrite dans le document EP-A-364075. Dans cette prise, les cordons optiques arrivent perpendiculairement à la prise murale.

Selon l'invention, la prise murale de raccordement pour système de câblage optique d'un immeuble, comporte :
- un réceptacle fixé dans une plinthe murale dans laquelle sont insérés des cordons optiques support de l'information à transmettre sur le réseau local de l'immeuble comportant une pluralité de terminaux,
- et des moyens de raccordement des cordons au terminal associé à la prise,
les moyens de raccordement comprenant :
- un cache amovible associé à un support amovible de connecteurs permettant la connexion optique des dits cordons,

le cache pouvant occuper une position d'attente dans laquelle il ferme la face avant du réceptacle, d'une part, ou une position d'utilisation où le plan du cache forme un dièdre avec cette face avant, d'autre part, les cordons sortant alors latéralement par rapport au réceptacle de part et d'autre de celui-ci,
la prise comportant des premiers moyens de positionnement coopérant avec des seconds moyens de positionnement appartenant au réceptacle de manière à faire passer le cache de la position d'attente à la position d'utilisation, et étant caractérisée comme revendiqué à la revendication 1.

D'autres caractéristiques et avantages de la présente invention apparaîtront dans la description suivante donnée à titre d'exemple non limitatif et en se référant aux dessins annexés.

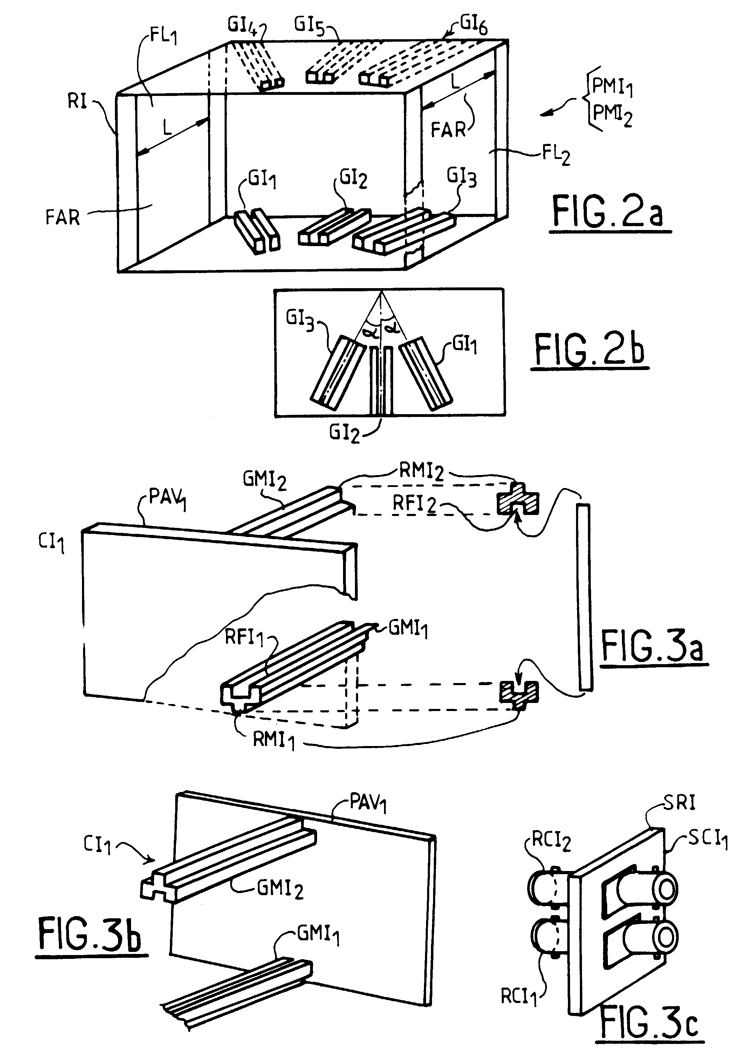

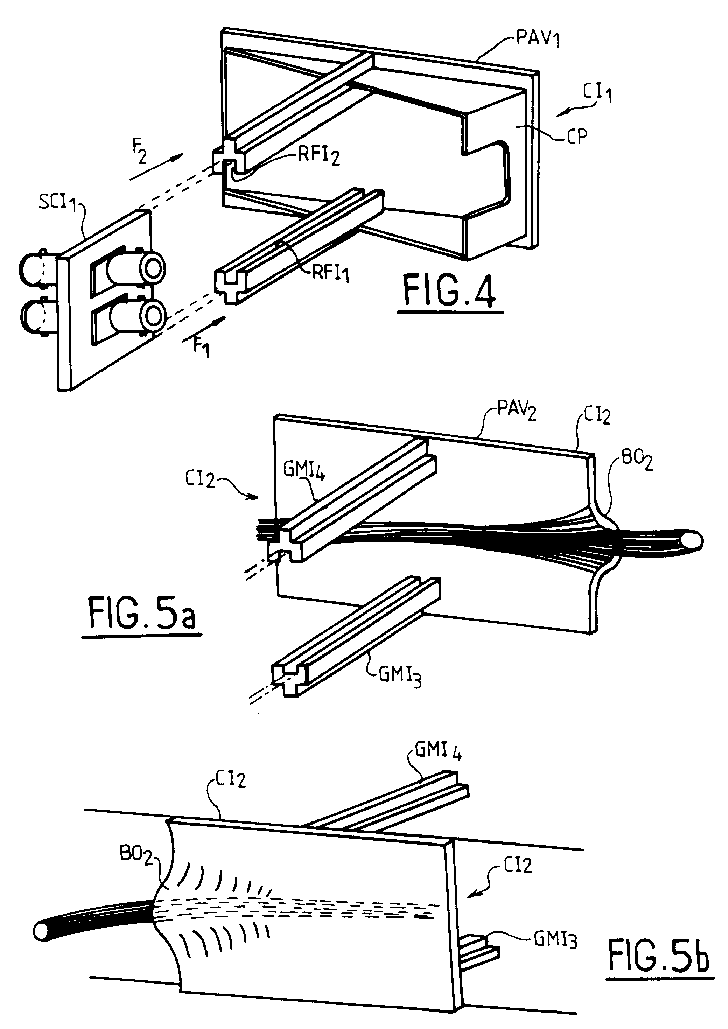

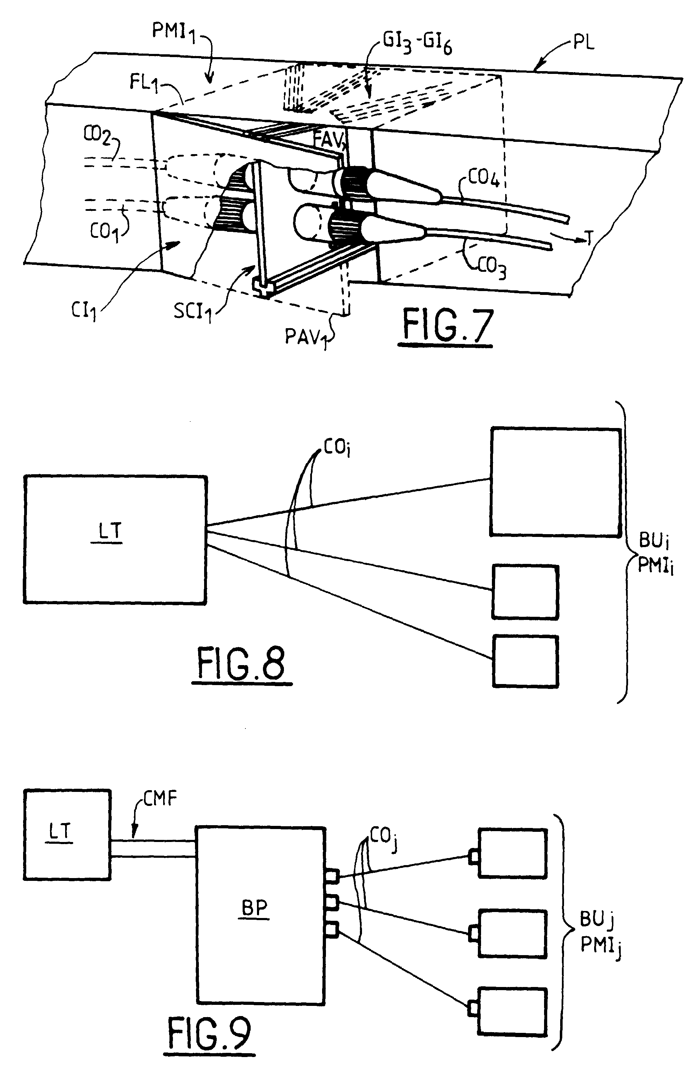

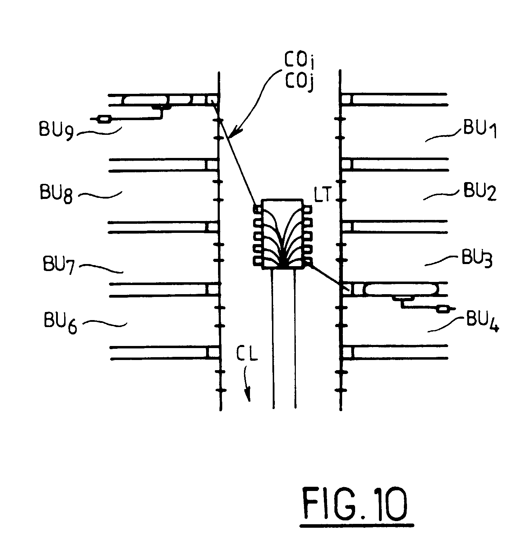

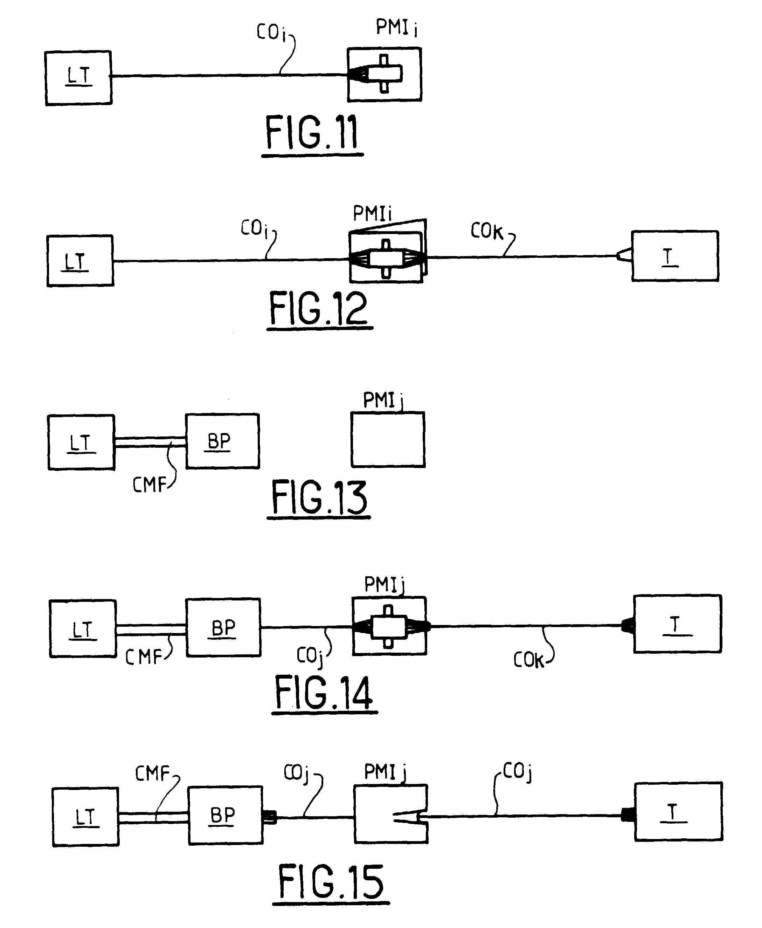

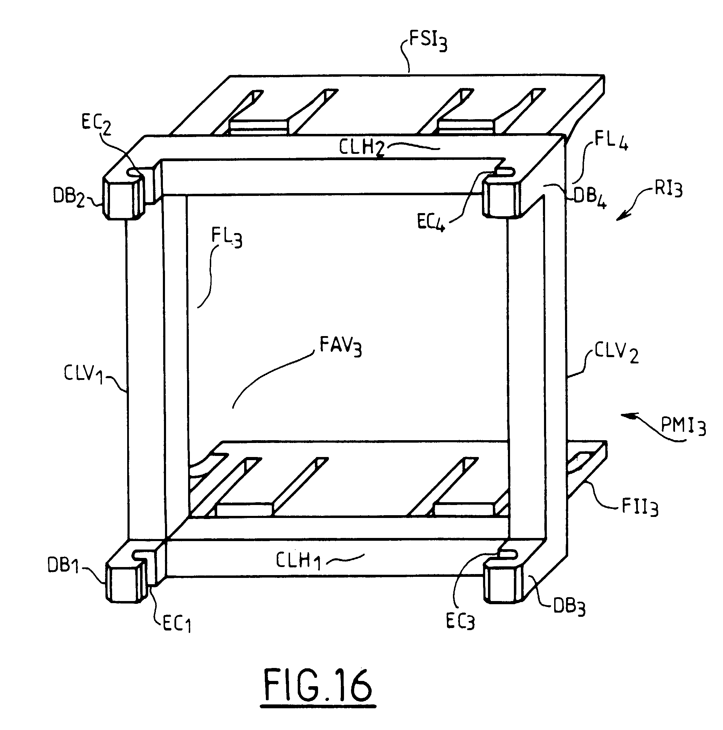

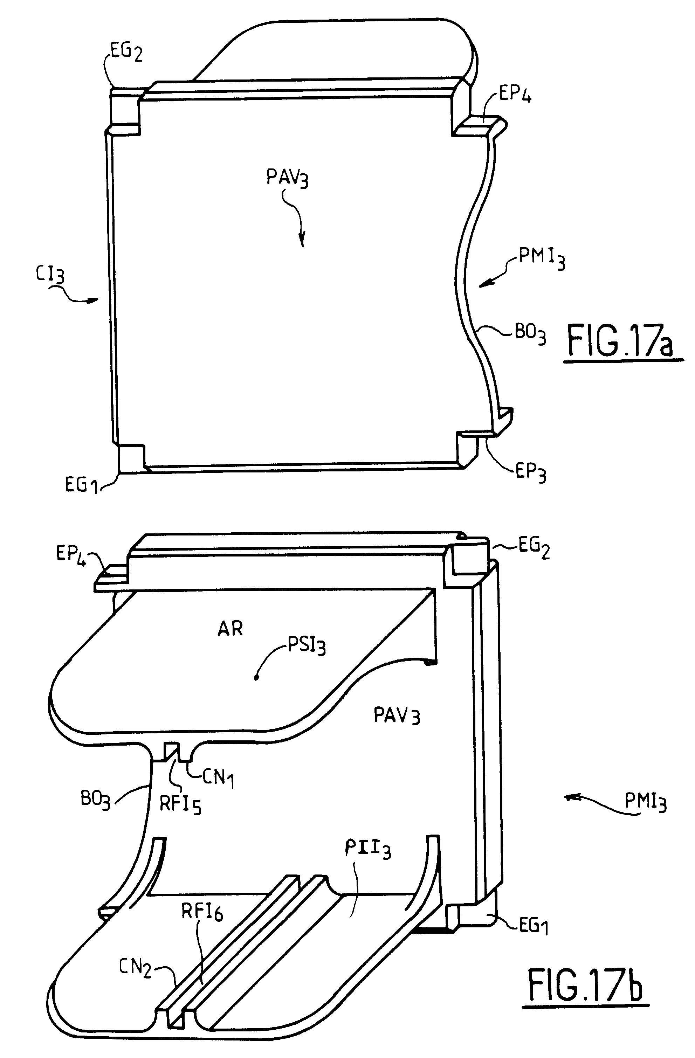

Sur ces dessins :
. la figure 1, composée des figures 1a et 1b montre deux exemples de prise murale de raccordements selon l'art antérieur,
. la figure 2, composée des figures 2a et 2b montre le réceptacle de la prise murale selon l'invention, destiné à recevoir le cache et le support du connecteur,
. la figure 3 composée des figures 3a, 3b, 3 c, qui sont des vues en perspectives de 3/4, montrent les différents éléments constitutifs d'un premier exemple de réalisation du cache destiné à être insérer dans le réceptacle,
. la figure 4 est une vue de ³/₄ en perspective montrant comment s'insère le support de connecteur à l'intérieur du premier modèle de réalisation du cache appartenant à une prise murale selon l'invention. La figure montre aussi, ne figurant pas sur les autres figures représentant le cache, le système de protection anti-poussière qui protège la connectique optique lorsque le cache est en position d'utilisation.
. La figure 5 composée des figures 5a et 5b montre la seconde réalisation du cache appartenant à la prise murale selon l'invention, la figure 5a étant une vue de 3/4 arrière en perspective et la figure 5b étant une vue de 3/4 avant en perspective.
. La figure 6, composée des figures 6a, 6b et 6c montre plus en détail la face avant du second modèle de réalisation de la prise murale de raccordement selon l'invention,
. La figure 7 montre vue de 3/4 en perspective le premier modèle de réalisation de la prise murale selon l'invention, en position d'utilisation,
. Les figures 8 et 9 montrent deux façons de réaliser des liaisons entre un local technique comportant un sous-répartiteur et différents points d'accès disposés à l'intérieur d'un bureau,
. La figure 10 est un autre schéma extrêmement simplifié montrant comment sont reliés les répartiteurs aux différents bureaux,
. Les figures 11 à 15 illustrent différents cas d'emplois de l'un ou l'autre des deux modèles de réalisation de la prise murale de raccordement selon l'invention.
. Les figures 16 et 17, cette dernière étant composée des figures 17a, 17b, montrent un troisième mode de réalisation de la prise murale selon l'invention.

On considère les figures 2, 3, 4 et 5 qui montrent les différents éléments constitutifs essentiels de la prise optique murale selon l'invention, qui correspondent respectivement au premier et au second mode de réalisation de la prise selon l'invention, à savoir PMI₁ et PMI₂.

Le premier mode de réalisation PMI₁ est formé par l'association du réceptacle RI montré aux figures 2a et 2b, du cache Cl₁ et du support de connecteur SCI₁ montrés aux figures 3a, 3b, et 3c ainsi qu'à la figure 4.

Par ailleurs, le second mode de réalisation PMI₂ est formé par l'association du réceptacle RI montré aux figures 2a et 2b et du cache CI2 montré aux figures 5a et 5b.

On considère le réceptacle RI montré à la figure 2. Celui-ci est de forme parallélépipédique rectangle et sa face arrière FAR est celle par laquelle le réceptacle RI est fixé sur la plinthe du mur, qui est identique à la plinthe PL montrée aux figures 1a et 1b. Bien entendu, la face arrière FAR est fixée par tout moyen approprié sur cette plinthe, par exemple par encastrement ou par tout autre moyen de fixation, par exemple par vissage.

La face avant FAV du réceptacle RI est celle par laquelle on introduit l'un ou l'autre des deux caches CI₁ et CI₂ montrés aux figures 3 et 4 d'une part et 5 d'autre part. Lorsque ces caches sont fixés à l'intérieur du réceptacle, la face avant FAV est fermée en tout ou partie par la face principale de l'un ou l'autre des deux caches précités (voir plus loin).

Le réceptacle RI comprend, disposées sur ces faces inférieures et supérieures, à l'intérieur du réceptacle, trois paires de glissières, à savoir la paire GI₁ et GI₄, la paire GI₂ et GI₅, la paire GI₃ et GI₆. Les trois glissières GI₁, GI₂, GI₃ sont disposées sur la face inférieure du réceptacle, alors que les glissières G₄ à G₆ sont disposées sur la face supérieures. Il est clair qu'à l'intérieur de chacune des paires de glissières, les deux glissières qui la composent se font face. On peut également dire qu'elles sont en regard l'une de l'autre. Ainsi, la glissière GI₁ est en regard de la glissière GI₄, GI₂ est en regard de GI₅ et GI₃ est en regard de GI₆. Toutes ces glissières sont des glissières femelles. Les glissières GI₂-GI₅ sont les glissières centrales, alors que les deux autres paires sont les glissières latérales. Les glissières centrales sont perpendiculaires à la face arrière (leur axe de symétrie longitudinal est perpendiculaire à cette face arrière) alors que les glissières latérales font un angle α avec les glissières centrales (leur axe de symétrie longitudinal fait un angle α avec l'axe de symétrie longitudinal des glissières centrales). Cet angle α est particulièrement mis en évidence à la figure 2b qui est une vue de dessus des glissières inférieures GI₁ à GI₃, vue depuis la face arrière FAR. La section des glissières peut être de forme quelconque. Aux figures 2a et 2b on les a montrées avec une section rectangulaire. Il est bien évident qu'on appelle section des glissières la partie centrale de celle-ci qui est creuse. On appelle cette section S.

On peut observer à la figure 2a que les faces latérales FL₁ et FL₂ perpendiculaires à la plinthe PL sont largement ouvertes, c'est-à-dire qu'elles comportent en leur partie centrale un évidement rectangulaire de largeur L qui peut permettre le passage des cordons de fibres optiques.

On se réfère désormais aux figures 3 et 4 qui montrent le premier mode CI₁ de réalisation du cache appartenant à la prise murale selon l'invention. Ce cache CI₁ comprend une partie avant PAV₁ rectangulaire dont les dimensions sont pratiquement celles de la face avant FAV du réceptacle RI. Bien entendu, la dimension de cette partie avant PAV₁ est légèrement inférieure d'une fraction de dixième de millimètres à la dimension de la face avant FAV de façon à lui permettre de s'insérer à l'intérieur du réceptacle. Il peut dans certains cas aussi constituer une fermeture type chapeau, s'il est de dimension légèrement plus grande que le réceptacle. Le cache CI₁ comprend en outre dans sa partie inférieure et dans sa partie supérieure, disposées sensiblement dans le plan de symétrie de la partie avant PAV₁, (plan de symétrie qui est perpendiculaire au plan de la plinthe lorsque le cache est inséré dans le réceptacle), deux glissières mâles, à savoir une glissière mâle inférieure GMI₁ et une glissière mâle supérieure GMI₂ destinées à s'insérer dans la section S de l'une quelconque des trois paires de glissières femelles GI₁-GI₄, GI₂-GI₅, GI₃-GI₆. De la sorte, chacune des glissières GMI₁ et GMI₂ comprend respectivement une rainure mâle RMI₁ et RMI₂. La section de ces rainures mâles est représentée rectangulaire aux figures 3a, 3b, et 4. Cette section rectangulaire a la même surface que la section rectangulaire S des rainures femelles des glissières femelles montrées aux figures 2a et 2b, afin de permettre aux rainures mâles RMI₁ et RMI₂ de venir s'insérer dans les rainures femelles des paires de glissières du réceptacle. Ainsi qu'on peut le voir aux figures 3 et 4, les rainures mâles RMI₁ et RMI₂ sont respectivement disposées dans la partie inférieure et dans la partie supérieure des glissières mâles correspondantes GMI₁ et GMI₂. Par ailleurs, chacune des glissières mâles GMI₁ et GMI₂ comprend des rainures femelles RFI₁ et RFI₂. Egalement montrées de section rectangulaire sur ces mêmes figures, RFI₁ et RFI₂ sont situées respectivement dans la partie supérieure de GMI₁ et dans la partie inférieure de GMI₂. Ainsi qu'on peut le voir par exemple à la figure 3a, la rainure femelle RFI₁ est située en dessus de la rainure RMI₁. De même la rainure mâle RMI₂ est située au dessus de la rainure femelle RFI₂.

On a représenté également, solidaire de PAV₁, un cache-poussière CP.

On peut voir également que l'axe de symétrie longitudinal des glissières mâles GMI₁ et GMI₂ est perpendiculaire au plan de la partie avant PAV₁.

Les deux rainures femelles RFI₁ et RFI₂ sont destinées à recevoir le support de connecteur SCI₁, que l'on insère par glissement à l'intérieur de celles-ci.

Ce support de connecteur SCI₁ est montré à la figure 3c. Il comprend un support rectangulaire SRI par exemple en matière plastique et des moyens de connexion des cordons de fibres optiques constitués par exemple par deux raccords normalisés de type ST, désignés par RCI₁ et RCl₂. Il est évident que tout type de connecteur optique de préférence normalisé peut être installé en tant que moyen de connexion sur ce support de connecteur SCI₁.

Le support de connecteur SCI₁ est une pièce amovible et on peut l'introduire par glissement ainsi qu'il est indiqué à la figure 4, d'arrière en avant, perpendiculairement au plan de CI₁. Le support s'introduit dans les deux rainures femelles RFI₁ et RFI₂.

Le premier mode de réalisation du cache CI₁ peut occuper deux positions :

### 1. Position d'attente :

Dans ce cas, le cache CI₁ est introduit dans la paire de glissières GI₂-GI₅. De ce fait, il ferme complètement le réceptacle RI. Il y a deux possibilités pour la position d'attente. Elles sont les suivantes :
a. Position d'attente simple : seuls le réceptacle RI et le cache CI₁ sont utilisés, le support connecteur SCI₁ pouvant être installé ou non dans les rainures RFI₁ et RFI₂.
b. Position d'attente câblée : dans ce cas, le support de connecteur SCI est installé dans les rainures RFI₁-RFI₂. Il est connecté à un câble de fibre optique d'arrivée, mais il n'y a pas d'utilisation. Le cache ferme donc complètement le réceptacle (il est évident, que dans ce cas, il n'y a pas de cordon optique de départ vers un terminal).

### 2. Position d'utilisation :

Le cache CI₁ est introduit dans l'une ou l'autre des paires de glissières latérales GI₁-GI₄ ou GI₃-GI₆, suivant que l'on désire une sortie des cordons vers le terminal à gauche ou à droite, ou suivant bien entendu le sens d'arrivée du câble de fibre optique provenant du sous-répartiteur. Dans ce cas, le cache présente alors une ouverture permettant la sortie du cordon, horizontalement et de façon sensiblement parallèle à la plinthe PL. Ceci est particulièrement mis en évidence à la figure 7 où l'on voit les deux cordons de fibres optiques CO₁ et CO₂ d'arrivée qui passent donc à l'intérieur de la face latérale FL₁ du réceptacle RI, dans la partie ouverte de cette partie latérale, et où l'on voit les cordons de départ CO₃ et CO₄ (correspondant respectivement aux cordons d'arrivée CO₁ et CO₂) qui partent vers le terminal T installé dans le bureau où est montée la prise murale PMI₁. On voit clairement sur la figure que le cache CI₁ est monté dans les paires de glissières latérales GI₃-GI₆ et de ce fait à un angle a avec le plan de la face avant FAV du réceptacle RI. Il y a donc un espace libre entre la face avant PAV₁ du cache CI₁ et la face avant FAV₁ du réceptacle RI, par lequel passent les cordons CO₃ et CO₄. Il est bien évident que aussi bien les cordons CO₁ et CO₂ que CO₃ et CO₄ sont raccordés respectivement aux moyens de connexion RCI₁ et RCI₂ du support SCI₁.

On considère le deuxième mode de réalisation PMI₂ de la prise murale selon l'invention. Ce deuxième mode de réalisation comprend un réceptacle RI identique à celui du premier mode de réalisation et qui porte donc la même dénomination, et un cache CI₂. Ce dernier comporte une partie avant PAV₂ sur laquelle sont fixées les glissières mâles GMI₃ et GMI₄ dont la structure est totalement identique à celle des glissières mâles GMI₁ et GMI₂ montrée aux figures 3 et 4.

On voit sur ces deux figures 5a et 5b que la partie avant PAV₂ comporte un bosselage BO₂ à l'intérieur duquel on fait passer un ou deux cordons ou encore deux câbles (soit 4 fibres optiques) ainsi qu'on peut mieux le voir par exemple à la figure 6b qui est une vue de dessus du bosselage BO₂ à l'intérieur duquel on fait passer les deux cordons CO₅ et CO₆. Ces deux cordons sont noyés par un joint souple qui les maintient en place à l'intérieur du bosselage BO₂. La figure 6c montre le bosselage comportant les deux cordons CO₅ et CO₆ vus de dessous, avec le système de fixation de ceux-ci SFI₂. A la figure 6a, on a représenté une vue d'ensemble montrant les deux cordons CO₅ et CO₆ lovés dans la plinthe PL sur la partie droite de la figure et passant dans le bosselage BO₂, le cordon étant à l'intérieur du bosselage parallèle au mur et au plancher, comme indiqué par la flèche A, la prise murale PMI₂ étant représentée vue de 3/4 en perspective montée sur la plinthe PL.

On considère les figures 16, 17a et 17b. Le troisième mode de réalisation de la prise murale selon l'invention comprend un réceptacle RI₃ et un cache CI₃. Le réceptacle est montré à la figure 16 alors que le cache est montré aux figures 17a et 17b, la figure 17a étant une vue de 3/4 avant alors que la figure 17b est une vue de 3/4 arrière.

Si l'on considère la figure 16, on voit que le réceptacle RI₃ ne comporte plus de glissières comme le réceptacle RI commun au premier et au second mode de réalisation PMI₁ et PMI₂. Les faces horizontales supérieures et inférieures FSI₃ et FII₃, du réceptacle RI₃ comportent, ainsi qu'on peut le voir sur cette même figure 16 des rainures qui servent tout simplement à faciliter le montage du réceptacle à l'intérieur de la plinthe murale où il va être fixé. Il n'y a donc pas lieu de décrire davantage ces rainures ni le mode de fixation du réceptacle à l'intérieur de la plinthe qui peut se faire de manière connue et qui de toute façon ne constitue pas une des caractéristiques de l'invention.

Le réceptacle RI₃ comporte une face avant FAV₃ qui comporte un cadre rectangulaire comportant deux côtés latéraux verticaux CLV₁ et CLV₂ et deux côtés latéraux horizontaux CLH₁ et CLH₂. La partie intérieure de ce cadre située à l'intérieur des côtés latéraux est destinée soit à être obturée complètement par le cache CI₃ lorsque le cache est en position d'attente (voir plus loin), soit à faire un dièdre d'angle α avec le cache de manière à laisser passer les cordons optiques entre la face avant FAV₃ et la surface du cache, d'une manière strictement identique à celle qui est montrée à la figure 7.

Le réceptacle RI₃ comporte également des faces latérales verticales FL₃ et FL₄ (perpendiculaires à FAV₃) par lesquelles peuvent passer également les cordons optiques, de la même manière qu'à la figure 7 par exemple.

Les côtés latéraux verticaux CLV₁ et CLV₂ comportent dans leur partie inférieure et dans leur partie supérieure des débordements saillants par rapport au plan de ceux-ci. Ces débordements saillants sont dénommés DB₁ (partie inférieure) et DB₂ (partie supérieure) pour le côté latéral vertical CLV₁, et sont dénommés DB₃ et DB₄ pour les parties inférieure et supérieure du côté latéral vertical CLV₂. Chacun des débordements saillants DB₁ à DB₄ comporte un encastrement à savoir respectivement EC₁ à EC₄. Chacun de ces encastrements est pratiqué à l'intérieur du volume constitué par chacun de ces débordements DP₁ à DP₄. On peut voir à la figure 16 que les encastrements EC₁ et EC₃ se font face, de même que les encastrements EC₂ et EC₄.

On considère désormais les figures 17a et 17b qui montrent le cache CI₃. Ce dernier a une partie avant PAV₃ de forme sensiblement rectangulaire, qui peut comporter un bossage BO₃ identique au bossage du cache CI₂ montré par exemple à la figure 5a ou encore 5b. Par ailleurs, CI₃ comporte sur son côté latéral gauche à la figure 17A (côté latéral droit à la figure 17b), dans sa partie inférieure et dans sa partie supérieure, des ergots EG₁, EG₂ destinés à être insérés à l'intérieur des encastrements EC₁ et EC₂ de la figure 16. Ces ergots EG₁ et EG₂ peuvent également être insérés dans les encastrements EC₃ et EC₄. Dans le premier cas (ergots à l'intérieur des encastrements EC₁ et EC₂), la prise murale ainsi constituée possède une charnière verticale autour de laquelle peut pivoter le cache CI₃ par rapport à la face FAV₃ de manière à ce que ce dernier fasse un dièdre d'angle α avec celle-ci, exactement de la même manière qu'indiqué à la figure 7. Dans ce cas, les cordons optiques passent entre la face avant FAV₃ du réceptacle RI₃ et la partie avant PAV₃ du cache CI₃. Bien entendu, on peut plaquer la partie avant PAV3 sur la face avant FAV₃ et dans ce cas, le cache CI₃ referme complètement le réceptacle RI₃. La prise murale PMI₃ est alors dans ce que l'on peut appeler une position d'attente, plus spécifiquement décrite ci-dessous.

Ainsi qu'on peut le voir sur la partie droite de la figure 17a et sur la partie gauche de la figure 17b, la partie PAV₃ du cache CI₃ comprend dans sa partie inférieure et dans sa partie supérieure des épaulements EP₃ et EP₄ qui sont destinés à venir en contact avec les débordements DB₄ (dans la partie inférieure de celui-ci) et DB₃ (dans la partie supérieure de celui-ci à la figure 16) lorsque le cache CI₃ vient refermer le réceptacle RI₃.

Si l'on considère la figure 17b on peut voir également que le cache CI₃ comporte des faces supérieure et inférieure PSI₃ et PII₃, qui sont horizontales et qui destinées à venir en contact avec les parties inférieure et supérieure respectivement des faces supérieures FSI₃ et inférieure FII₃ du réceptacle RI₃. Par ailleurs, la partie supérieure PSI₃ comporte dans sa partie inférieure au centre de celle-ci une cornière CN₁ en forme de U. De même la partie inférieure PII₃ comporte en sa partie centrale et dans sa partie supérieure une cornière CN₂, également en forme de U. Les deux cornières CN₁ et CN₂ se font face et comportent par ailleurs des rainures femelles RFI₅ et RFI₆. A l'intérieur de ces rainures femelles peut venir s'insérer le support de connecteur SCI₁ montré à la figure 4.

Les caches CI₁, CI₂ et CI₃ peuvent occuper deux positions qui sont les suivantes :

### . 1. Position d'attente :

De la même façon que le cache CI₁, CI₂ est introduit dans les glissières centrales GI₂-GI₅ et de ce fait, ferme complètement le réceptacle. Il convient de noter que dans tous les cas d'utilisation CI₂ peut recevoir également le support de connecteur SCI₁.

### 2. Position d'utilisation :

Dans cette position, le cache CI₂ reste introduit dans les glissières centrales du réceptacle. Son rôle spécifique est alors de permettre le passage d'un ou de deux cordons, grâce au bosselage BO₂, sans qu'il y ait connexion de ceux-ci. Il y a dans ce cas économie à la fois en matière de budget optique, puisqu'il y a moins d'atténuation du signal transmis, et puisqu' on n'utilise pas de moyens de connexion qui affaiblissent toujours le signal et d'autre part en matière de coût puisque l'on se dispense de moyens de connexion. Les cordons CO₅-CO₆ (ou un seul des deux, CO₅ ou CO₆) sortent vers le terminal d'utilisation T, soit à droite, soit à gauche de la figure 5, par simple retournement du haut vers le bas ou du bas vers le haut du cache CI₂.

On se réfère désormais aux figures 8, 9, 10 qui montrent de façon schématique comment sont reliés les locaux techniques comprenant les sous-répartiteurs aux différentes prises optiques murales situées dans un ou plusieurs bureaux. Ainsi, à la figure 8, on peut voir un local technique LT relié à un ensemble de bureaux BUᵢ à la figure 8 et BUⱼ à la figure 9. A la figure 10, le local technique LT est relié à une pluralité de bureaux BU₁ à BU₉, ces bureaux étant supposés répartis de part et d'autre d'un couloir CL, le local technique étant supposé représenté au milieu du couloir.

Ainsi qu'on peut le voir à la figure 8, le local technique est dans un premier mode de réalisation relié par un ensemble de cordons bi-fibres COᵢ (à la figure 8 on a représenté 3 cordons, mais il peut y en avoir bien davantage) au bureau BUᵢ dans lesquels sont situés un ensemble de prises murales PMlᵢ. Bien entendu, dans chacun des bureaux appartenant à l'ensemble BUᵢ, il peut y avoir une ou plusieurs prises murales, du type de celles qui sont montrées aux figures 2 à 7.

A la figure 9, on peut voir un second mode de liaison entre le local technique LT et l'ensemble de bureaux BUⱼ munis d'un ensemble de prises murales PMlⱼ, selon l'invention. Le local technique LT est d'abord relié à une boite de proximité BP par l'intermédiaire d'un câble multi-fibres CMF. Le boîtier de proximité BP est lui-même relié par l'intermédiaire d'un ensemble de cordons bi-fibres COⱼ analogue à COᵢ à l'ensemble des bureaux BUⱼ munis des prises murales PMIⱼ.

A la figure 10, le local technique LT est représenté relié par l'intermédiaire de cordons bi-fibres, analogue à COᵢ ou COⱼ aux différents bureaux. Ces cordons COᵢ et COⱼ sont disposés à l'intérieur d'un faux plafond dans le couloir CL et à partir de ce faux plafond, ils sont redistribués à l'intérieur de chacun des bureaux BU₁ à BU₉.

La liaison par fibre optique entre le local technique LT et l'une ou l'autre des prises murales PMIᵢ ou PMIⱼ peut s'effectuer par précâblage ou postcâblage avec montage ou non des connecteurs au moment de l'installation (c'est-à-dire avec présence ou non du support de connecteur de type SCI₁).

L'utilisation d'un boîtier de proximité permet de réduire la distance entre le sous-répartiteur contenu dans le local technique et les prises murales. Dans ce cas, il est alors possible d'utiliser entre le boîtier de proximité BP et les différentes prises murales des cordons préconnectorisés directement en fabrication à l'usine et donc plus fiables.

L'un ou l'autre des deux modes de réalisation des prises murales selon l'invention permet de traiter tous les cas d'utilisations possibles énoncés ci-dessus.

En particulier, on se réfère désormais aux figures 11 à 15 qui montrent plus précisément quels sont ces différents cas d'utilisation.

On considère d'abord la figure 11. Celle-ci montre une liaison précâblée, en attente. Le cache CI₁, étant équipé de son support connecteur SCI₁ ferme le réceptacle RI de la prise murale ici désignée par PMIi. Le connecteur SCI₁ est relié par le câble COᵢ au local technique LT.

On considère la figure 12. Celle-ci montre une liaison précâblée ou postcâblée en position d'utilisation, le cache CI₁ étant utilisé et permettant la sortie vers la droite du cordon COₖ allant vers le terminal T, le local technique LT étant relié comme à la figure 11 à la prise murale PMIᵢ, par le câble COᵢ. Pour plus de détail concernant la figure 12, on peut se reporter utilement à la figure 7.

On considère la figure 13. Cette figure correspond à ce qui est représenté à la figure 9, c'est-à-dire que le local technique LT est relié par un câble multi-fibres CMF à une boite de proximité BP. Dans le cas qui est montré à la figure 13, la prise murale PMIⱼ est en attente et le cache de la prise, qu'il s'agisse du cache CI₁ ou CI₂, ferme le réceptacle RI. A la figure 13, on est en attente d'un postcâblage.

On considère la figure 14 où l'on a supposé que la prise murale PMlⱼ est du type premier mode de réalisation, c'est-à-dire avec un cache de type CI₁. On utilise un cordon de liaison COⱼ entre le boîtier de proximité BP et la prise murale PMlⱼ et on relie le terminal T à cette prise murale par l'intermédiaire d'un cordon COₖ. Les deux cordons COⱼ et COₖ sont raccordés à un support de connecteur de type SCI₁. Dans ce cas, le cache de type CI₁ est en position d'utilisation permettant la sortie du cordon, par exemple vers la droite. Dans le cas de la figure 14, il s'agit soit de pré, soit de postcâblage.

On considère la figure 15. Sur cette figure, le local technique LT est toujours relié à un boîtier de proximité BP par l'intermédiaire d'un cordon muti-fibres CMF. Le boîtier de proximité est relié directement au terminal T par le cordon COⱼ. Pour cela on utilise le cache de type CI₂ qui ferme complètement le réceptacle RI en laissant passer le cordon COⱼ par le bosselage de type BO₂. A la figure 15, la prise murale est désignée par PMIⱼ. Pour l'équipement montré à la figure 15, on utilise un cordon COⱼ qui est précâblé directement dans l'usine de fabrication, d'où un gain en coût, en fiabilité et en rapidité d'installation et même en rapidité de déconnexion.

En résumé, on voit que les avantages de la prise murale selon l'invention sont les suivants :
- possibilité avec le cache de type CI₂ d'économiser une connexion,
- possibilité d'arrivée ou de départ du cordon de liaison vers la prise murale soit à droite, soit à gauche de celle-ci (voir figure 7, par exemple),
- sens d'arrivée et de sortie du cordon horizontal parallèlement à la plinthe, ce qui assure une meilleure protection du cordon et offre la meilleure solution en ce qui concerne le problème du rayon de courbure R du cordon optique, en facilitant le lovage de ce dernier,
- prise murale à très faible coût,
- facilité d'installation qui ne nécessite aucun outil spécialisé,
- réponse à tous les cas possible d'utilisation avec n'importe quel type de connecteur,
- utilisation possible des prises murales selon l'invention soit en pré soit en postcâblage.

## Revendications

1. Prise murale de raccordement (PMI₁ à PMI₃) pour système de câblage optique d'un immeuble, comportant :
- un réceptacle (RI, RI₃) fixé dans une plinthe (PL) murale dans laquelle sont insérés des cordons optiques (COi, COj, CO₁ à CO₄) support de l'information à transmettre sur le réseau local de l'immeuble comportant une pluralité de terminaux,
- des moyens de raccordement des cordons (CI₁, CI₂) au terminal associé à la prise,
- les moyens de raccordement comprenant :
- un cache amovible (CI₁ à CI₃) associé à un support amovible de connecteurs (SCI₁) permettant la connexion optique des dits cordons,
le cache pouvant occuper une position d'attente dans laquelle il ferme la face avant du réceptacle, d'une part, ou une position d'utilisation où le plan du cache forme un dièdre avec cette face avant, d'autre part, les cordons sortant alors latéralement par rapport au réceptacle de part et d'autre de celui-ci,
la prise comportant des premiers moyens de positionnement (GMI₁-GMI₂, EG₁-EG₂) coopérant avec des seconds moyens de positionnement appartenant au réceptacle (GI₁ à GI₆, EC₁-EC, EC₃-EC₄) de manière à faire passer le cache de la position d'attente à la position d'utilisation,
et étant caractérisée en ce que les faces latérales (FL1, FL2) du réceptacle qui sont perpendiculaires à la plinthe (PL) comprennent, dans leur partie centrale, un évidement rectangulaire permettant le passage des fibres optiques parallèlement à la pinthe (PL),
et en ce que le support amovible (SCI1) comprend des moyens de connexion (RCI1, RCI2) des fibres optiques et est agencé pour être monté perpendiculairement à la plinthe ce qui permet aux fibres d'être parallèles à la plinthe de part et d'autre de celle-ci.

2. Prise murale selon la revendication 1 caractérisé en ce que le cache amovible CI1 à C12) est destiné à être inséré dans un système de glissières (GI1-G14, GI2-GI5, GI3-GI6) disposées à l'intérieur du réceptacle (RI) sur les faces supérieure et inférieure de celui-ci, le support de connecteur (SCI1) étant destiné à être introduit par glissement à l'intérieur de rainures qui sont portées par le cache (RFI1, RFI2).

3. Prise murale selon la revendication 2, caractérisée en ce que les glissières du réceptacle (RI) comprennent une première paire de glissières centrales GI₂-GI₅), et deux secondes paires (GI₁-GI₄, GI₂-GI₅, GI₃-GI₆) de glissières latérales de part et d'autre des glissières centrales, faisant chacune un angle α avec la paire de glissières centrales, les glissières d'une même paire étant en regard l'une de l'autre.

4. Prise murale selon la revendication 3, caractérisée en ce que le cache amovible (CI₁) comprend une partie avant (PAV₁) destinée à venir fermer la face avant (FAV) du réceptacle, comportant une troisième paire de glissières (GMI₁, GMI₂) disposées sensiblement dans le plan de symétrie vertical qui lui est perpendiculaire, chaque glissière étant destinée à coopérer avec une glissière correspondante de la première paire ou de l'une quelconque des secondes paires, de manière à ce que le cache (CI₁) soit inséré dans le receptacle (RI).

5. Prise murale selon la revendication 3, caractérisée en ce que le cache amovible (CI₁) comprend une partie avant (PAV₂) destinée à venir fermer la face avant (FAV₁) du réceptacle (RI), comportant une quatrième paire de glissières ((GMI₃, GMI₄) disposées sensiblement dans le plan de symétrie vertical qui lui est perpendiculaire, chaque glissière étant destinée à coopérer avec une glissière correspondante de la première paire ou de l'une quelconque des secondes paires, de manière à ce que le cache (CI₁) soit inséré dans le réceptacle (RI), la partie avant (PAV₂) comportant en outre un bosselage (BO₂) à l'intérieur duquel sont fixés des cordons ou câbles optiques parallèles au mur où est fixée la prise murale, et au plancher perpendiculaire au mur.

6. Prise selon l'une quelconque des revendications 2 ou 3, caractérisée en ce que le support de connecteurs (SCI₁) comprend un support rectangulaire (SRI) et des moyens de connexion (RCI₁, RCI₂) de cordons ou câbles de fibre optique fixés sur le support, lequel est destiné à venir s'insérer dans des rainures (RFI₁, RFI₂) pratiquées dans l'une quelconque des seconde, troisième ou quatrième paires de glissières.

7. Prise selon la revendication 1 caractérisée en ce que le réceptacle (RI₃) comporte sur les deux côtés verticaux de sa face avant, dans la partie inférieure et supérieure de celle-ci, des débordements saillants par rapport au plan de celle-ci (DP_{I} à DP₄), ces derniers contenant chacun un encastrement caractérisée en ce que(EC₁ à EC₄), le cache (CI₃) comportant dans sa partie avant, sur l'un des côtés latéraux verticaux dans la partie inférieure et dans la partie supérieure de celui-ci, un ergot (EG₁, EG₂), destiné à être inséré dans l'encastrement correspondant du réceptacle, la prise murale formée par le cache (CI₃) et le réceptacle (RI₃) possédant ainsi une charnière verticale autour de laquelle peut pivoter le cache d'un angle de valeur a de manière à permettre la sortie latérale des cordons par rapport au réceptacle de part et d'autre de celui-ci, parallèlement à la plinthe.

## Patentansprüche

1. Wandverbindungsdose (PMI₁ bis PMI₃) für das optische Verkabelungssystem eines Gebäudes, die folgendes aufweist:
- eine Aufnahme (RI, RI₃), die in einem Mauersockel (PL) befestigt ist, in den optische Schnüre (COᵢ, COj, CO₁ bis CO₄) als Träger der Information eingeführt sind, die auf dem lokalen Netzwerk des Gebäudes zu übertragen ist, das mehrere Terminals aufweist,
- Mittel zur Verbindung der Schnüre (CI₁, CI₂) mit dem der Dose zugeordneten Terminal,
- wobei die Verbindungsmittel folgendes aufweisen:
- eine abnehmbare Abdeckung (CI₁ bis CI₃), die einem abnehmbaren Träger (SCI₁) für Verbinder zugeordnet ist, der den optischen Anschluß der Schnüre ermöglicht,
wobei die Abdeckung einerseits eine Warteposition, in der sie die Vorderseite der Aufnahme verschließt, und andererseits eine Verwendungsposition einnehmen kann, wo die Ebene der Abdeckung mit dieser Vorderseite ein Dieder bildet, wobei die Schnüre dann bezüglich der Aufnahme beiderseits davon lateral austreten,
wobei die Dose erste Positionierungsmittel (GMI₁ - GMI₂, EG₁ - EG₂) aufweist, die mit zweiten Positionierungsmitteln (GI₁ bis GI₆, EC₁ - EC, EC₃ - EC₄) zusammenwirken, die zu der Aufnahme gehören, so daß die Abdeckung aus der Warteposition in die Verwendungsposition übergeht,
und dadurch gekennzeichnet, daß die Seitenflächen (FL₁, FL₂) der Aufnahme, die senkrecht zu dem Sockel (PL) liegen, in ihrem zentralen Teil eine rechtwinklige Ausnehmung aufweisen, die den Durchgang der Lichtleitfasern parallel zu dem Sockel (PL) ermöglicht,
und daß der abnehmbare Träger (SCI₁) Anschlußmittel (RCI₁, RCI₂) für die Lichtleitfasern aufweist und derart ausgebildet ist, daß er senkrecht zu dem Sockel angebracht werden kann, wodurch die Fasern beiderseits des Sockels parallel dazu liegen können.

2. Wanddose nach Anspruch 1, dadurch gekennzeichnet, daß die abnehmbare Abdeckung (CI₁ bis CI₂) zum Einfügen in ein System von Gleitschienen (GI₁ - GI₄, GI₂ - GI₅, GI₃ - GI₆) bestimmt ist, die im Inneren der Aufnahme (RI) an ihrer Ober- und Unterseite anqeordnet sind, wobei der Verbinderträger (SCI₁) zum gleitenden Einführen ins Innere von Nuten (RFI₁, RFI₂) bestimmt ist, die von der Abdeckung getragen werden.

3. Wanddose nach Anspruch 2, dadurch gekennzeichnet, daß die Gleitschienen der Aufnahme (RI) ein erstes Paar von zentralen Gleitschienen (GI₂ - GI₅) sowie zwei zweite Paare von seitlichen Gleitschienen (GI₁ - GI₄, GI₂ - GI₅, GI₃ - GI₆) beiderseits der zentralen Gleitschienen aufweist, die mit dem Paar von zentralen Gleitschienen jeweils einen Winkel α bilden, wobei die Gleitschienen eines gleichen Paares einander gegenüberliegen.

4. Wanddose nach Anspruch 3, dadurch gekennzeichnet, daß die abnehmbare Abdeckung (CI₁) einen vorderen Teil (PAV₁) aufweist, der zum Verschluß der Vorderseite (FAV) der Aufnahme bestimmt ist und ein drittes Paar von Gleitschienen (GMI₁, GMI₂) aufweist, die im wesentlichen in der dazu senkrechten vertikalen Symmetrieebene angeordnet sind, wobei jede Gleitschiene zum Zusammenwirken mit einer entsprechenden Gleitschiene des ersten Paares oder eines der zweiten Paare bestimmt ist, so daß die Abdeckung (CI₁) in die Aufnahme (RI) eingefügt wird.

5. Wanddose nach Anspruch 3, dadurch gekennzeichnet, daß die abnehmbare Abdeckung (CI₁) einen vorderen Teil (PAV₂) aufweist, der zum Verschluß der Vorderseite (FAV₁) der Aufnahme (RI) bestimmt ist und ein viertes Paar von Gleitschienen (GMI₃, GMI₄) aufweist, die im wesentlichen in der dazu senkrechten vertikalen Symmetrieebene angeordnet sind, wobei jede Gleitschiene zum Zusammenwirken mit einer entsprechenden Gleitschiene des ersten Paares oder eines der zweiten Paare bestimmt ist, so daß die Abdeckung (CI₁) in die Aufnahme (RI) eingefügt wird, wobei der vordere Teil (PAV₂) ferner eine Ausbauchung (BO₂) aufweist, in deren Innerem Lichtleitschnüre oder Lichtleitkabel parallel zu der Wand befestigt sind, an der die Wanddose befestigt ist, sowie zu dem zur Wand senkrechten Boden.

6. Dose nach einem der Ansprüche 2 oder 3, dadurch gekennzeichnet, daß der Träger für die Verbinder (SCI₁) einen rechteckigen Träger (SRI) und Anschlußmittel (RCI₁, RCI₂) für Lichtleitschnüre oder Lichtleitfaserkabel aufweist, die an dem Träger befestigt sind, der zum Einführen in Nuten (RFI₁, RFI₂) bestimmt ist, die in einem von dem zweiten, dritten oder vierten Paar von Gleitschienen vorgesehen sind.

7. Dose nach Anspruch 1, dadurch gekennzeichnet, daß die Aufnahme (RI₃) an den beiden vertikalen Seiten der Vorderfläche im unteren und oberen Teil Vorsprünge (DP₁ bis DP₄) aufweist, die bezüglich deren Ebene vorstehen, wobei sie jeweils eine Rille (EC₁ bis EC₄) aufweisen, dadurch gekennzeichnet, daß die Abdekkung (CI₃) in ihrem Vorderteil an einer der vertikalen lateralen Seiten im unteren und oberen Teil einen Vorsprung (EG₁, EG₂) aufweist, der zum Einfügen in die entsprechende Rille der Aufnahme bestimmt ist, wodurch die durch die Abdeckung (CI₃) und die Aufnahme (RI₃) gebildete Wanddose ein vertikales Scharnier besitzt, um das die Abdeckung um einen Winkel des Wertes α schwenken kann, so daß die Schnüre bezüglich der Aufnahme an deren beiden Seiten parallel zu dem Sockel seitlich austreten können.

## Claims

1. Wall connection socket (PMI₁, to PMI₃) for an optical cabling system of a building, comprising:
- a receptacle (RI, RI₃) fixed to a skirting board (PL) into which are inserted optical cords (C0i, C0j, C0₁ to C0₄) as a medium for the information to be transmitted over the local network of the building comprising a plurality of terminals,
- means for connecting the cords (CI₁, CI₂) to the terminal associated with the socket,
- connection means comprising:
- a removable cover (CI₁ to CI₃) associated with a removable connector support (SCI₁) allowing the optical connection of said cords,
the cover being able to occupy a stand-by position in which it closes off the front face of the receptacle, on the one hand, or a usage position where the plane of the cover forms a dihedral with this front face, on the other hand, the cords then coming out laterally in relation to the receptacle, on either side thereof,
the socket comprising first positioning means (GMI₁-GMI₂, EG₁-EG₂) cooperating with second positioning means belonging to the receptacle (GI₁ to GI₆, EC₁-EC, EC₃-EC₄) so as to cause the cover to change from the stand-by position to the usage position,
and being characterised in that the lateral faces (FL1, FL2) of the receptacle, which are perpendicular to the skirting board (PL), comprise in their central portion a rectangular hollowing-out allowing the passage of the optical fibres parallel to the skirting board (PL),
and in that the removable support (SCI₁) comprises connection means (RCI1, RCI2) for the optical fibres and is arranged so as to be mounted perpendicular to the skirting board, which allows the fibres to be parallel to the skirting board on either side thereof.

2. Wall socket according to Claim 1, characterised in that the removable cover (CI₁ to C12) is intended to be inserted in a system of slide bars (GI1-GI4, GI2-GI5, GI3-GI6) arranged inside the receptacle (RI) on the upper and lower faces thereof, the connector support (SCI₁) being intended to be introduced by sliding within grooves that are carried by the cover (RFI1, RFI2).

3. Wall socket according to Claim 2, characterised in that the slide bars of the receptacle (RI) comprise a first pair of central slide bars (GI₂-GI₅), and two second pairs (GI₁-GI₄, GI₂-GI₅, GI₃-GI₆) of lateral slide bars on either side of the central slide bars, each forming an angle α with the pair of central slide bars, the slide bars of any one pair facing each other.

4. Wall socket according to Claim 3, characterised in that the removable cover (CI₁) comprises a front part (PAV₁) intended to close off the front face (FAV) of the receptacle, comprising a third pair of slide bars (GMI₁, GMI₂) arranged substantially in the vertical plane of symmetry that is perpendicular thereto, each slide bar being intended to co-operate with a corresponding slide bar of the first pair or of any one of the second pairs, so that the cover (CI₁) is inserted into the receptacle (RI).

5. Wall socket according to Claim 3, characterised in that the removable cover (CI₁) comprises a front portion (PAV₂) intended to close off the front face (FAV₁) of the receptacle (RI), comprising a fourth pair of slide bars (GMI₃, GMI₄) arranged substantially in the vertical plane of symmetry that is perpendicular thereto, each slide bar being intended to co-operate with a corresponding slide bar of the first pair or of any one of the second pairs, so that the cover (CI₁) is inserted into the receptacle (RI), the front portion (PAV₂) further comprising a boss (B0₂) inside which are fixed cords or optical cables parallel to the wall where the wall socket is fixed, and to the floor perpendicular to the wall.

6. Socket according to any one of Claims 2 or 3, characterised in that the connector support (SCI₁) comprises a rectangular support (SRI) and means (RCI₁, RCI₂) for connecting cords or optical fibre cables fixed to the support, which is intended to be inserted into grooves (RFI₁, RFI₂)made in any one of the second, third or fourth pairs of slide bars.

7. Socket according to Claim 1, characterised in that the receptacle (RI₃) comprises, on both vertical sides of its front face, in the lower and upper portion thereof, projections jutting out from the plane thereof (DP₁ to DP₄), the latter each containing a sunken portion characterised in that (EC₁ to EC₄), the cover (CI₃) comprising in its front portion, on one of the vertical lateral sides in the lower portion and in the upper portion thereof, a lug (EG₁, EG₂), intended to be inserted into the corresponding sunken portion of the receptacle, the wall socket formed by the cover (CI₃) and the receptacle (RI₃) thus having a vertical hinge about which the cover can pivot by an angle of a value α so as to allow the cords to come out laterally relative to the receptacle on either side thereof, parallel to the skirting board.
